# EUROPÄISCHE PATENTANMELDUNG

(11) **EP 2 653 803 A1**
(43) Veröffentlichungstag der Anmeldung: **23.10.2013**
(21) Anmeldenummer: 12007944.7
(22) Anmeldetag: 26.11.2012
(51) Int. Cl.: F24J 2/52, F24J 2/10

(54) **Photovoltaikeinheit**

(30) Priorität: 18.04.2012 DE 102012007743
(71) Anmelder: Rauschert Solar GmbH, 96515 Judenbach (DE)
(72) Erfinder: Metzler, Richard, 96515 Judenbach-Heinersdorf (DE)
(74) Vertreter: Ingerl, Reinhard E.

(57) **Zusammenfassung**

Die vorliegende Erfindung zeigt eine Photovoltaikeinheit aus mindestens einem Photovoltaikmodul und einer Tragkonstruktion für das Photovoltaikmodul, wobei die Photovoltaikeinheit auf dem Erdboden lose abstellbar und durch Gewichte und/oder Erdnägel sicherbar ist.

## Beschreibung

Die vorliegende Erfindung betrifft eine Photovoltaikeinheit aus mindestens einem Photovoltaikmodul und einer Tragkonstruktion für das Photovoltaikmodul.

Nach dem bisherigen Stand der Technik werden Photovoltaikanlagen nach folgendem Konstruktionsverfahren auf offenem Gelände montiert: In den Boden werden Metallpfähle gerammt oder in Fundamente zementiert. Auf diesen wird eine Metallträgerkonstruktion montiert. Auf diese Metallträgerkonstruktion wird eine Unterkonstruktion mit Leisten und Klemmen montiert, welche letztlich die Photovoltaikmodule trägt. Es existieren noch aufwendigere Konstruktionen, welche durch bewegliche Elemente die Module dem Sonnengang nachführen (Tracking). Aufgrund der aufwendigen Montagesysteme sind die Kosten für die Herstellung und Montage bekannter Photovoltaikanlagen hoch.

Aufgabe der vorliegenden Erfindung ist es daher, eine Photovoltaikeinheit zur Verfügung zu stellen, welche in Herstellung und/oder Montage kostengünstiger ist.

Diese Aufgabe wird erfindungsgemäß durch eine Photovoltaikeinheit gemäß Anspruch 1 gelöst.

Die erfindungsgemäße Photovoltaikeinheit umfasst mindestens ein Photovoltaikmodul und eine Tragkonstruktion für das Photovoltaikmodul. Erfindungsgemäß ist dabei vorgesehen, dass die Photovoltaikeinheit auf dem Erdboden lose abstellbar und durch Gewichte und/oder Erdnägel sicherbar ist.

Dies ermöglicht eine sehr einfache, schnelle und kostengünstige Montage. Montagegeräte wie Hebebühnen, Stapler, etc. sind nicht erforderlich. Weiterhin kann auf Erdarbeiten verzichtet werden. Auch können die Arbeiten überwiegend durch niedrig qualifizierte Arbeitskräfte ausgeführt werden.

Weiterhin erfolgt keine Versiegelung des Bodens. Bei der Nutzung der Beschwerung ohne Verwendung von Erdnägeln wird überhaupt nicht in die Struktur des Erdreiches eingegriffen, was z. B. bei der Verwendung von Deponieflächen vorteilhaft sein kann. Auch kann so eine einfache Aufstellung auf bereits versiegelten, befestigten Flächen erfolgen.

Durch den Wegfall der Erdarbeiten können die Photovoltaikeinheiten auch auf unebenen Flächen wie z.B. Hanglagen installiert werden. Einzelne Geländehindernisse wie z.B. Gräben oder Felsen können dabei einfach ausgespart werden.

Weiterhin kann die gesamte Photovoltaikanlage während ihrer Betriebszeit mit geringem Aufwand versetzt werden, so dass das Gelände bei Bedarf auch anders genutzt werden kann. So können z.B. Durchfahrtsmöglichkeiten geschaffen werden. Weiterhin ist es möglich, z. B. bei vorhersehbaren Extremwetterereignissen die Anlage mit geringem Aufwand zu demontieren und einzulagern.

Besonders bevorzugt besteht die erfindungsgemäße Photovoltaikeinheit aus genau einem Photovoltaikmodul und einer entsprechenden Tragkonstruktion für dieses Photovoltaikmodul.

Das für eine erfindungsgemäße Photovoltaikeinheit eingesetzte Photovoltaikmodul kann dabei einen Rahmen aufweisen, mit welchem es auf der Tragkonstruktion befestigt ist. Insbesondere kann das Photovoltaikmodul dabei einen Aluminium - oder Stahlrahmen umfassen.

Weiterhin kann das erfindungsgemäße Photovoltaikmodul ein Anschlusselement zum elektrischen Anschluss des Photovoltaikmoduls aufweisen.

Insbesondere kann der elektrische Anschluss der Photovoltaikeinheit dabei über eine Steckverbindung erfolgen. Dies ermöglicht ein einfaches Auf- und Abbauen einer aus erfindungsgemäßen Photovoltaikeinheiten aufgebauten Photovoltaikanlage.

Bevorzugt ist das Photovoltaikmodul quer auf der Tragkonstruktion ausgerichtet, so dass die langen Seiten des Photovoltaikmoduls horizontal verlaufen. Hierdurch wird die Gesamthöhe der Photovoltaikeinheit reduziert. Dadurch kann der verfügbare Platz aufgrund der geringeren Verschattung besser ausgenützt werden. Auch sind die Windlasten deutlich geringer.

Die erfindungsgemäße Photovoltaikeinheit weist bevorzugt folgende Maße und/oder Gewichte auf:

Vorteilhafterweise weist die erfindungsgemäße Photovoltaikeinheit ein Gewicht von weniger als 50 kg auf, weiterhin vorteilhafterweise von weniger als 40 kg. Beispielsweise kann daher eine erfindungsgemäße Photovoltaikeinheit ein Gewicht zwischen 10 kg und 35 kg aufweisen, weiterhin vorteilhafterweise zwischen 15 und 25 kg.

Weiterhin vorteilhafterweise kann die erfindungsgemäße Photovoltaikeinheit eine Höhe von weniger als 2 m, weiterhin vorteilhafterweise von weniger als 1,5 m aufweisen. Insbesondere kann die Höhe dabei zwischen 50 cm und 130 cm, weiterhin vorteilhafterweise zwischen 70 cm und 100 cm betragen.

Weiterhin vorteilhafterweise weist die erfindungsgemäße Photovoltaikeinheit eine Länge von weniger als 3 m, weiter vorteilhafterweise von weniger als 2,5 m auf. Insbesondere kann die erfindungsgemäße Photovoltaikeinheit eine Länge zwischen 1,4 m und 2,2 m aufweisen, weiterhin vorteilhafterweise zwischen 1,5 m und 2 m.

Weiterhin vorteilhafterweise kann die erfindungsgemäße Photovoltaikeinheit eine Breite von weniger als 1,5 m, weiterhin vorteilhafterweise von weniger als 1,2 m aufweisen. Beispielsweise kann die erfindungsgemäße Photovoltaikeinheit dabei eine Breite zwischen 0,5 und 1,1 m aufweisen.

Durch die oben angegebenen Größen bzw. Gewichtsangaben sind die erfindungsgemäßen Photovoltaikeinheiten problemlos und ohne den Einsatz von Montagegeräten wie Hebebühnen oder Staplern transportierbar.

Eine größere Photovoltaikanlage kann durch Aufstellen einer Vielzahl von separaten erfindungsgemäßen Photovoltaikeinheiten problemlos bereitgestellt werden.

Die Tragkonstruktion ist erfindungsgemäß so aufgebaut, dass sie ein loses Abstellen der Photovoltaikeinheit auf dem Erdboden und eine Sicherung durch Gewichte und/oder Erdnägel ermöglicht.

In einer bevorzugten Ausführungsform der vorliegenden Erfindung umfasst die Tragkonstruktion zwei Seitenteile sowie mindestens ein und vorteilhafterweise mindestens zwei Verbindungselemente, welches bzw. welche die Seitenteile miteinander verbinden. Dies ermöglicht dabei einen besonders einfachen und kostengünstigen Aufbau der erfindungsgemäßen Photovoltaikeinheit.

In einer besonders bevorzugten Ausführungsform umfasst die Tragkonstruktion neben dem PV Modul selbst, den Seitenteilen und den Verbindungselementen dabei keine weiteren lasttragenden Elemente.

Weiterhin kann die Tragkonstruktion mindestens einen Abstellbereich zum Abstellen auf dem Erdboden aufweisen. Ein solcher Abstellbereich kann dabei beispielsweise als Teil der Seitenteile und/oder als Teil der Verbindungselemente ausgeführt sein. Beispielsweise kann dabei ein unterer Teil oder Schenkel der Seitenteile den Abstellbereich bilden.

Weiterhin kann die Tragkonstruktion mindestens einen Befestigungsbereich umfassen, an welchem das Photovoltaikmodul befestigt ist. Auch bei dem Befestigungsbereich kann es sich um einen Teil der Seitenteile und/oder der Verbindungselemente handeln. Beispielsweise kann dabei ein oberer Teil oder Schenkel der Seitenteile als Befestigungsbereich für das Photovoltaikmodul dienen.

Weiterhin kann die Tragkonstruktion mindestens einen Sicherungsbereich aufweisen, welcher mit Gewichten beschwert und/oder welcher eine Verbindung mit Erdnägeln ermöglicht. Auch dieser Sicherungsbereich kann als Teil der Seitenteile und/oder der Verbindungselemente ausgeführt sein.

Besonders bevorzugt werden der Abstellbereich und der Sicherungsbereich durch ein gemeinsames Element gebildet. Vorteilhafterweise erstreckt sich dieses Element dabei in horizontaler Richtung, so dass es bei Aufstellung auf dem Erdboden entlang des Erdbodens verläuft. Insbesondere kann dabei ein unterer Teil oder Schenkel der Seitenteile auf dem Erdboden abstellbar und durch Gewichte und/oder Erdnägel sicherbar sein.

Alternativ oder zusätzlich können jedoch auch die Verbindungselemente als Abstellbereich und/oder Sicherungsbereich dienen. Ebenso ist es denkbar, dass die Verbindungselemente den Befestigungsbereich bilden.

Vorteilhafterweise ist das Photovoltaikmodul bei einer Aufstellung der Photovoltaikeinheit auf einer horizontal ausgerichteten Fläche mit einem Winkel zwischen 10° und 50° zur Horizontalen ausgerichtet. Vorteilhafterweise beträgt der Winkel dabei zwischen 20° und 40°, besonders bevorzugt ca. 30°. Hierdurch kann das Photovoltaikmodul im richtigen Winkel gegenüber der Sonne positioniert werden.

Vorteilhafterweise definiert die Tragkonstruktion dabei eine Aufstellebene und eine Befestigungsebene, welche einen Winkel zwischen 10° und 50°, vorteilhafterweise einen Winkel zwischen 20° und 40° einschließen. Insbesondere können dabei der oben beschriebene Abstellbereich und der oben beschriebene Befestigungsbereich eine entsprechende Aufstellebene und eine entsprechende Befestigungsebene definieren, welche einen solchen Winkel miteinander einschließen. Insbesondere können dabei ein unterer Teil oder Schenkel der Seitenteile sowie ein oberer Teil oder Schenkel der Seitenteile die Aufstellebene und die Befestigungsebene definieren und einen entsprechenden Winkel miteinander einschließen.

Weiterhin kann die erfindungsgemäße Tragkonstruktion aus Rohren und/oder Profilen aufgebaut sein. Dies ermöglicht eine besonders kostengünstige Fertigung.

Vorteilhafterweise sind die oben beschriebenen Seitenteile dabei aus einem gebogenen Rohr und/oder Profil aufgebaut. Alternativ können zur Herstellung der Seitenteile auch mehrere miteinander verbundene Rohre und/oder Profile eingesetzt werden, beispielsweise mehrere miteinander verschweißte Rohre und/oder Profile.

Weiterhin kann der oben beschriebene Abstellbereich und/oder der oben beschriebene Sicherungsbereich durch mindestens einen Rohrabschnitt und/oder Profilabschnitt gebildet werden. Insbesondere können dabei der Abstellbereich und der Sicherungsbereich durch den gleichen Rohrabschnitt und/oder Profilabschnitt gebildet werden. Weiterhin kann erfindungsgemäß auch der oben beschriebene Befestigungsbereich durch einen Rohrabschnitt und/oder Profilabschnitt gebildet werden.

Bevorzugt bestehen die Rohre und/oder Profile aus Metall, insbesondere aus verzinktem Stahl und/oder Aluminium.

Besonders bevorzugt wird dabei ein einzelnes Photovoltaikmodul auf zwei gebogene Rohre und/oder Profile, welche die Seitenteile bilden, montiert, wobei die Seitenteile durch zwei gerade Rohre und/oder Profile miteinander verbunden sind.

Erfindungsgemäß kann die Tragkonstruktion dabei Aussparungen aufweisen, durch welche Erdnägel zur Befestigung der Tragkonstruktion am Erdboden hindurchgeführt werden können. Insbesondere können die Aussparungen dabei in dem Sicherungsbereich, welcher oben dargestellt wurde, angeordnet sein. Weiterhin können die Aussparungen dabei durch die oben beschriebenen Rohre und/oder Profile hindurch gehen, wobei es sich insbesondere um Ausstanzungen in den Rohren und/oder Profilen handeln kann.

Weiterhin kann die Tragkonstruktion Auflagebereiche aufweisen, auf welche Gewichte aufgelegt werden können. Insbesondere werden die Auflagebereiche dabei durch den oben beschriebenen Sicherungsbereich zur Verfügung gestellt. Insbesondere können die Rohre und/oder Profile dabei so angeordnet sein, dass sie mit Gewichten beschwert werden können.

Besonders bevorzugt ist das Photovoltaikmodul mit der Tragkonstruktion gemäß der vorliegenden Erfindung verklebt. Dies erlaubt einen besonders kostengünstigen Aufbau des Photovoltaikmoduls, und gegebenenfalls eine Endmontage direkt am Aufstellort.

Weiterhin kann vorgesehen sein, dass Teile der Tragkonstruktion untereinander verklebt sind. Insbesondere können dabei die oben beschriebenen Seitenteile mit dem bzw. den Verbindungselementen verklebt sein. Besonders bevorzugt weisen die Seitenteile dabei Aussparungen auf, in welche die Verbindungselemente eingeschoben werden. Die Seitenteile und die Verbindungselemente können so ebenfalls einfach miteinander verbunden werden, wobei die Endmontage auch hier gegebenenfalls erst am Aufstellort erfolgen kann.

Weiterhin ist die Trennung von Modul und Trägerkonstruktion durch die Klebung wesentlich aufwendiger als das Lösen oder Klemmverbindung. Hierdurch wird der Diebstahl der Module erschwert.

In einer bevorzugten Ausführungsform sind die erfindungsgemäßen Photovoltaikeinheiten stapelbar ausgeführt. Insbesondere kann die Tragkonstruktion dabei nach unten eine Öffnung definieren, mit welcher die Photovoltaikeinheit auf eine identische Photovoltaikeinheit aufgesetzt werden kann. Dabei können Kontaktelemente an der Tragkonstruktion vorgesehen sein, welche ein Aufsetzen der Tragkonstruktionen der gestapelten Photovoltaikeinheiten aufeinander gewährleisten. Hierdurch wird sichergestellt, dass das Photovoltaikmodul beim Stapeln nicht belastet wird.

Die vorliegende Erfindung umfasst weiterhin eine Photovoltaikanlage aus mehreren erfindungsgemäßen Photovoltaikeinheiten, insbesondere aus einer Vielzahl von solchen Photovoltaikeinheiten. Diese können dabei unabhängig voneinander separat aufgestellt werden.

In einer bevorzugten Ausführungsform sind zwischen den Photovoltaikeinheiten Reflektoren angeordnet. Diese erhöhen zum einen die Stromausbeute, und können zudem zur Reduzierung von Windlasten eingesetzt werden.

Vorteilhafterweise bestehen die Reflektoren dabei aus einem flexiblen Material wie z.B. Textilien , so dass sie kostengünstig herstellbar und einfach zu montieren sind.

Die Reflektoren können dabei an Verbindungselementen der Tragkonstruktionen, wie sie oben dargestellt wurden, befestigt sein.

Insbesondere können sich die Reflektoren dabei von einer Längsseite eines Photovoltaikmoduls einer ersten Photovoltaikeinheit zur gegenüberliegenden Längsseite eines Photovoltaikmoduls einer weiteren Photovoltaikeinheit erstrecken.

Vorteilhafterweise sind die Verbindungselemente der Tragkonstruktion mit einem Abstand von weniger als 20 cm zur jeweils äußeren Längskante des Photovoltaikmoduls an der Tragkonstruktion angeordnet. Vorteilhafterweise beträgt der Abstand zumindest auf einer Seite weniger als 10 cm. Hierdurch können an den Verbindungselementen Reflektoren angeordnet werden, ohne dass sich zwischen dem Photovoltaikmodul und den Reflektoren eine größere Öffnung ergeben würde. Hierdurch können Windlasten reduziert werden.

Weiterhin können benachbarte Photovoltaikeinheiten seitlich miteinander verbunden werden, beispielsweise durch entsprechende Haken an der Tragkonstruktion, insbesondere an den Seitenteilen. Auch hierdurch können die Windlasten und die Stabilität der Photovoltaikanlage erhöht werden. (gute Idee)

Die vorliegende Erfindung umfasst weiterhin ein Verfahren zur Herstellung einer Photovoltaikanlage mit mindestens einer Photovoltaikeinheit gemäß der vorliegenden Erfindung. Die Photovoltaikeinheit wird dabei auf einer Stellfläche abgestellt und dort gesichert. Die Sicherung kann dabei zum einen durch Beschweren mit Gewichten, wie beispielsweise Sandsäcken, Betonklötzen, Steinen oder Metallteilen erfolgen. Alternativ oder zusätzlich kann eine Fixierung durch Erdnägel erfolgen. Je nach lokaler Windsituation kann durch das gewählte Gewicht sowie durch die Gestaltung der Befestigung mit Erdnägeln die Befestigung variabel gestaltet werden. Weiterhin kann die Konstruktion der Erdnägel an die Beschaffenheit des Bodens angepasst werden.

Vorteilhafterweise wird dabei eine Vielzahl von Photovoltaikeinheiten auf diese Weise jeweils separat auf der Stellfläche abgestellt und gesichert.

In einer besonders bevorzugten Ausführungsform können die Tragkonstruktion und das Photovoltaikmodul separat angeliefert und vor Ort miteinander verklebt werden. Weiterhin können Teile der Tragkonstruktion separat angeliefert und vor Ort miteinander verklebt werden. Weiterhin kann der Aufbau der Tragkonstruktion und/oder der Photovoltaikeinheit dabei so erfolgen, wie dies bereits oben beschrieben wurde.

Die vorliegende Erfindung umfasst weiterhin ein Verfahren zum Betrieb einer Photovoltaikanlage mit mindestens einer Photovoltaikeinheit gemäß der vorliegenden Erfindung. Dabei ist vorgesehen, dass die Photovoltaikeinheit nach der Aufnahme des Betriebes bei Bedarf versetzt werden kann. Hierdurch kann das für die Photovoltaikanlage zur Verfügung gestellte Gelände bei Bedarf auch anders genutzt werden. Alternativ oder zusätzlich kann vorgesehen sein, dass die Photovoltaikeinheit zeitweise eingelagert wird. Hierdurch kann diese beispielsweise bei vorhergesagten Extremwetterereignissen vor Schäden gesichert werden. Durch die lösbare Verbindung mit der Aufstellfläche können die Photovoltaikeinheiten daher nach Aufnahme des Betriebs der Photovoltaikanlage versetzt und/oder zeitweise eingelagert werden. Nach dem versetzen und/oder einlagern kann die Photovoltaikanlage dann ohne größeren Aufwand wieder aufgestellt und weiter betrieben werden.

Vorteilhafterweise dient das erfindungsgemäße Verfahren dabei dem Betrieb einer Photovoltaikanlage mit einer Vielzahl von Photovoltaikeinheiten. Vorteilhafterweise werden dabei mehrere oder alle Photovoltaikeinheiten während ihrer Betriebszeit versetzt und/oder zeitweise eingelagert.

Die vorliegende Erfindung wird nun Anhand des Ausführungsbeispiels sowie Zeichnungen näher dargestellt.

Dabei zeigen:
- Fig. 1:: ein Ausführungsbeispiel einer erfindungsgemäßen Photovoltaikeinheit aus Photovoltaikmodul und Tragkonstruktion gemäß der vorliegenden Erfindung,
- Fig. 2:: die Tragkonstruktion für ein Photovoltaikmodul gemäß der vorliegenden Erfindung und
- Fig. 3:: eine Photovoltaikanlage aus mehreren Photovoltaikeinheiten sowie zwischen diesen angeordneten Reflektoren.

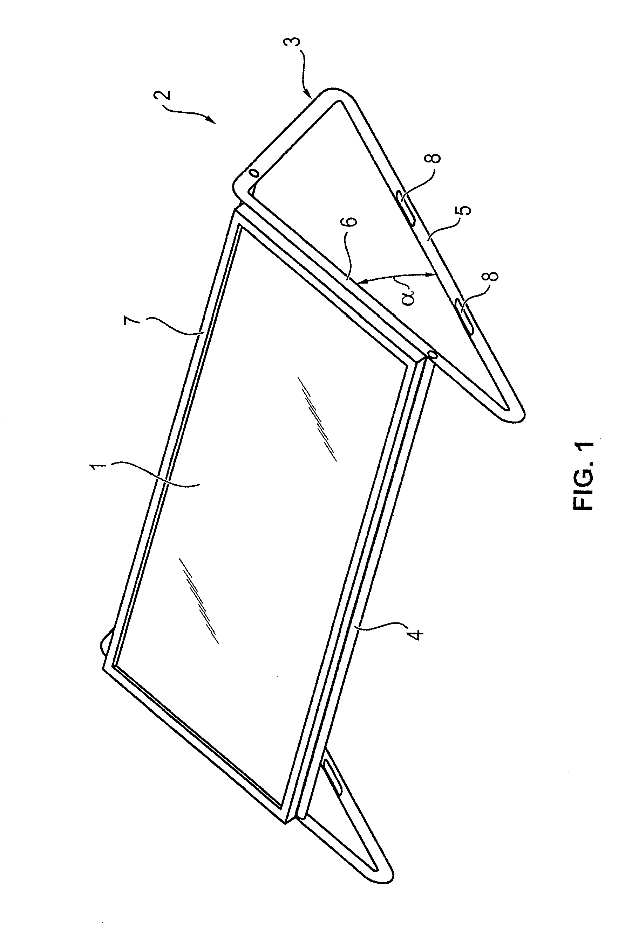

In Fig. 1 ist ein Ausführungsbeispiel einer erfindungsgemäßen Photovoltaikeinheit gezeigt. Diese besteht aus einem Photovoltaikmodul 1, welches einzeln auf einer Tragkonstruktion 2 angeordnet ist. Die Tragkonstruktion dient dabei dazu, das Photovoltaikmodul im richtigen Winkel von ca. 30° gegenüber der Sonne zu positionieren und dieses so am Boden zu sichern, dass die Photovoltaikeinheit den Schnee- und Windlasten standhalten kann. Hierfür wird die Tragkonstruktion 2 erfindungsgemäß auf den Erdboden gestellt und mit Gewichten beschwert und/oder mit Erdnägeln mit dem Boden verbunden.

Das Photovoltaikmodul weist dabei einen Rahmen 7 auf, über welchen es mit der Trägerkonstruktion verbunden ist. Das Modul kann dabei beispielsweise eine Größe von 1 m x 1,60 m oder von 1 m x 2 m und ein Gewicht von ca. 20 kg aufweisen. Die Tragkonstruktion kann dabei beispielsweise ein Gewicht von ca. 5 kg aufweisen, so dass das Gesamtgewicht der Photovoltaikeinheit ca. 25 kg beträgt. Das Modul ist im Ausführungsbeispiel quer auf der Tragkonstruktion angeordnet, so dass die Gesamthöhe der Photovoltaikeinheit bei maximal 70 cm bis 100 cm liegt. Durch die geringen Abmessungen sowie das geringe Gewicht des Gesamtelementes werden die statischen Belastungen minimiert.

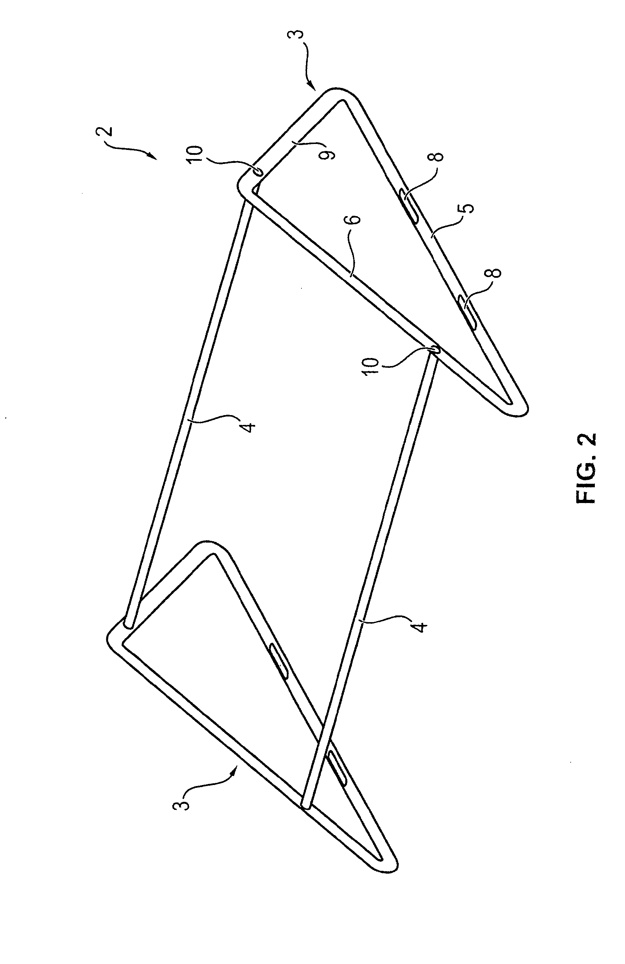

Die in Fig. 2 näher dargestellte Tragkonstruktion besteht dabei aus zwei Seitenteilen 3, welche über Verbindungselemente 4 miteinander verbunden sind. Die Seitenteile 3 und die Verbindungselemente 4 sind dabei im Ausführungsbeispiel aus Rohren gefertigt. Die Rohre können dabei beispielsweise aus verzinktem Stahl oder Aluminium bestehen.

Die Seitenteile 3 weisen jeweils einen unteren Schenkel 5 auf, mit welchem die Tragkonstruktion auf dem Boden abgestellt wird. Die unteren Schenkel 5 können dabei zudem mit Gewichten beschwert und/oder über Erdnägel gesichert werden. Die Seitenteile weisen weiterhin einen oberen Schenkel 6 auf, welcher gegenüber dem unteren Schenkel 5 einen Winkel α von ca. 30° einnimmt. An diesen oberen Schenkeln 6 ist das Photovoltaikmodul mit seinen kürzeren Seiten befestigt.

Der untere Schenkel 5 und der obere Schenkel 6 sind im Ausführungsbeispiel durch einen hinteren Schenkel 9 miteinander verbunden. Im Ausführungsbeispiel bestehen die Seitenteile dabei aus gebogenen Rohren. Alternativ könnten auch mehrere Rohrsegmente miteinander verbunden werden, beispielsweise verschweißt.

Die Verbindungselemente 4 werden durch gerade Rohre gebildet. Das untere Verbindungselement verbindet dabei die oberen Schenkel 6 der Seitenteile in einem Bereich unterhalb des Photovoltaikmoduls 1. Das obere Verbindungselement verbindet dagegen die hinteren Schenkel 9 der Seitenteile in einem Bereich unterhalb der Oberkante des Photovoltaikmoduls 1.

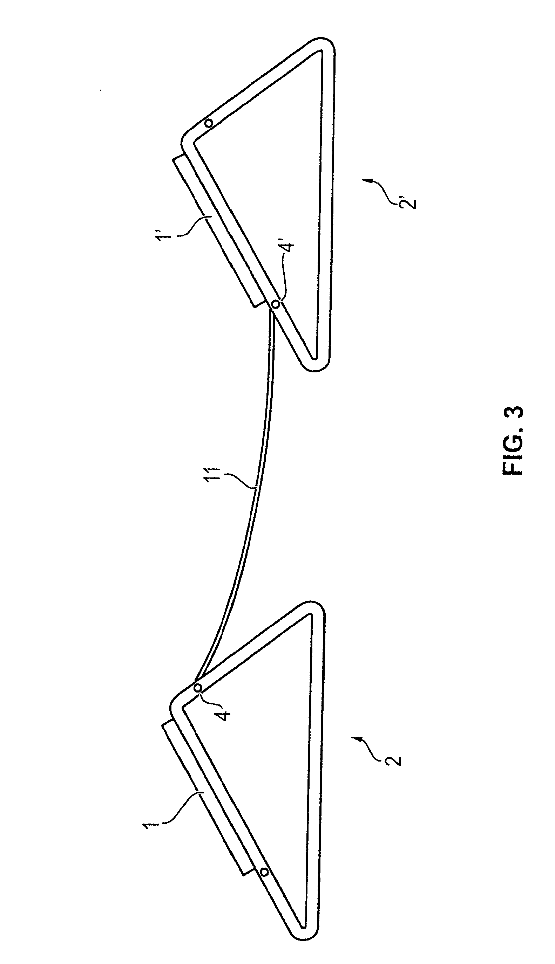

Die Verbindungselemente können so zum Anbringen von Reflektoren 11 genutzt werden, wie dies in Fig. 3 dargestellt ist. Dabei verläuft der Reflektor 11 von dem oberen Verbindungselement 4 einer ersten erfindungsgemäßen Photovoltaikeinheit zu dem unteren Verbindungselement 4' einer zweiten erfindungsgemäßen Photovoltaikeinheit. Als Reflektor 11 kann dabei beispielsweise ein flexibles Material, beispielsweise ein Gewebe oder eine Plane eingesetzt werden. Solche Reflektoren erhöhen neben der Lichtausbeute die Windstabilität der Konstruktion. Dabei können eine Vielzahl von Photovoltaikeinheiten hintereinander aufgestellt und wie in Fig. 3 dargestellt mit Reflektoren verbunden werden.

Die erfindungsgemäße Photovoltaikeinheit bestehend aus dem Photovoltaikmodul und der aus Rohren bestehenden Tragkonstruktion kann einfach auf den Erdboden gestellt und mit Sandsäcken, Betonklötzen, Steinen oder Metallteilen beschwert werden. Insbesondere können diese auf den unteren Schenkel 5 der Seitenteile aufgelegt werden. Zudem sind in diese unteren Schenkeln 5 der Seitenteile zwei Löcher 8 gestanzt, welche für eine Befestigung der Photovoltaikeinheit mit Hilfe von Erdnägeln im Boden verwendet werden können. Die Fixierung durch Erdnägel kann dabei alternativ oder zusätzlich zu der Beschwerung mit Gewichten erfolgen. Je nach lokaler Windsituation kann dabei durch das gewählte Gewicht sowie durch die Gestaltung der Befestigung mit Erdnägeln die Befestigung variabel gestaltet werden. Die Konstruktion der Erdnägel kann dabei zudem an die Beschaffenheit des Bodens angepasst werden.

Im Ausführungsbeispiel weisen die Seitenteile weiterhin jeweils zwei Löcher 10 auf, in welche die Verbindungselemente 4 eingeschoben werden können. Hierdurch wird eine verbesserte mechanische Stabilität der Verbindung zwischen den Verbindungselementen und den Seitenteilen gewährleistet.

Weiterhin können die Rohre untereinander sowie mit dem Aluminiumrahmen des Photovoltaikmoduls verklebt werden. Dies kann mit geringem Aufwand direkt auf der Baustelle erfolgen. Zudem wird es durch dieses Verfahren möglich, mit relativ großen Toleranzen der Rohre zu arbeiten. Insbesondere sind dabei Toleranzen im Bereich von mehreren Millimetern möglich. Als Kleber kommt vorteilhafterweise ein Zweikomponentenkleber zum Einsatz.

Die Verklebung der Komponenten miteinander erschwert zudem den Diebstahl der Module, da eine Trennung von Modul und Trägerkonstruktion wesentlich aufwendiger als das Lösen einer Schraub- oder Klemmverbindung ist. Ein Abtransport des Moduls mit der Trägerkonstruktion würde dagegen sehr viel Stauraum benötigen.

In einer alternativen, nicht in den Figuren dargestellten Ausführungsform können die Photovoltaikeinheiten jedoch auch stapelbar ausgeführt sein. Insbesondere ist die Tragkonstruktion dabei so ausgeführt, dass mehrere identisch ausgeführte erfindungsgemäße Photovoltaikeinheiten übereinander gestapelt werden können. Beispielsweise können hierfür bei dem in Fig. 1 bis 3 gezeigten Ausführungsbeispiel die Seitenteile schräg nach unten und außen verlaufen, so dass sie übereinander stapelbar sind.

Weiterhin kann alternativ zu der im Ausführungsbeispiel gezeigten Tragkonstruktion kann das Abstellen auf dem Boden bzw. die Sicherung am Boden auch über im Bodenbereich verlaufende Verbindungselemente zwischen den Seitenteilen erfolgen. Solche Verbindungselemente könnten dabei zusätzlich oder anstatt der im Ausführungsbeispiel gezeigten Verbindungselemente 4 eingesetzt werden. Bei einer solchen Ausführung könnte auf den unteren Schenkel der Seitenteile verzichtet werden.

Die zum Aufbau der Tragkonstruktion eingesetzten Rohre weisen bevorzugt einen runden Querschnitt auf. Alternativ können jedoch auch beliebige andere Querschnitte zum Einsatz kommen, bspw. rechteckige oder dreieckförmige. Weiterhin kann alternativ zu den im Ausführungsbeispiel verwendeten Rohren auf Profile zurück gegriffen werden, bspw. auf Flachbänder, T- oder U-Profile.

Die Rohre und/oder Profile bestehen dabei bevorzugt aus Metall, insbesondere aus verzinktem Stahl und/oder Aluminium.

Die bereits eingangs kurz dargestellten Vorteile der Erfindung werden im folgenden noch einmal kurz zusammen gefasst:

Zum einen reduziert das erfindungsgemäße Montagesystem die Kosten für die Unterkonstruktion sowie die Montage der Photovoltaikeinheiten erheblich. Hierdurch ist es bereits bei den heutigen Preisen für Module, Wechselrichter und Anschlüsse möglich, Photovoltaik wirtschaftlich ohne Subventionen zu betreiben, indem einfach Strom für den Eigenbedarf erzeugt wird.

Neben den geringen Kosten hat das erfindungsgemäße Montagesystem noch weitere Vorteile:

Die Montage kann sehr einfach, schnell und kostengünstig erfolgen. Montagegeräte wie Hebebühnen, Stapler, etc. sind nicht erforderlich. Auch können die Arbeiten überwiegend durch niedrig qualifizierte Arbeitskräfte ausgeführt werden.

Weiterhin erfolgt keine Versiegelung des Bodens. Bei der Nutzung der Beschwerung ohne Verwendung von Erdnägeln wird noch nicht einmal in die Struktur des Erdreiches eingegriffen, was z. B. bei der Verwendung von Deponieflächen vorteilhaft sein kann. Auch kann einfache Aufstellung auf bereits versiegelten Flächen erfolgen.

Die erfindungsgemäßen Photovoltaikeinheiten können ohne Erdarbeiten installiert werden. Die Installation ist dabei auch auf unebenen Flächen wie z.B. Hanglagen möglich. Weiterhin können einzelne Geländehindernisse wie z.B. Gräben oder Felsen einfach ausgespart werden.

Weiterhin kann die gesamte Photovoltaikanlage, welche üblicherweise aus einer Vielzahl von erfindungsgemäßen Photovoltaikeinheiten besteht, während ihrer Betriebszeit mit geringem Aufwand versetzt werden, so dass das Gelände bei Bedarf auch anders genutzt werden kann. So können z.B. Durchfahrtsmöglichkeiten geschaffen werden. Weiterhin ist es möglich, beispielsweise bei einem vorhersehbaren Extremwetterereignis wie z.B. einem Hurrikan die Anlage mit geringem Aufwand zu demontieren und einzulagern.

Weiterhin kann die Anlage im Innenbereich ohne Baugenehmigung bzw. nach dem vereinfachten Bauanzeigeverfahren errichtet werden, was die Planungszeiten und Kosten erheblich reduziert.

## Patentansprüche

1. Photovoltaikeinheit aus mindestens einem Photovoltaikmodul und einer Tragkonstruktion für das Photovoltaikmodul,
**dadurch gekennzeichnet,**
**dass** die Photovoltaikeinheit auf dem Erdboden lose abstellbar und durch Gewichte und/oder Erdnägel sicherbar ist.

2. Photovoltaikeinheit nach Anspruch 1, wobei die Tragkonstruktion aus zwei Seitenteilen sowie mindestens einem und vorteilhafterweise mindestens zwei Verbindungselementen, welches bzw. welche die Seitenteile miteinander verbinden, besteht, und/oder wobei die Tragkonstruktion mindestens einen Abstellbereich zum Abstellen auf dem Erdboden und/oder einen Befestigungsbereich, an welchem das Photovoltaikmodul befestigt ist, und/oder einen Sicherungsbereich, welcher mit Gewichten beschwert und/oder welcher eine Verbindung mit Erdnägeln ermöglicht, umfasst, wobei vorteilhafterweise der Abstellbereich und der Sicherungsbereich durch ein gemeinsames Element, welches sich vorteilhafterweise in horizontaler Richtung erstreckt, gebildet werden, insbesondere durch einen Teil der Seitenteile.

3. Photovoltaikeinheit nach Anspruch 1 oder 2, wobei das Photovoltaikmodul bei einer Aufstellung der Photovoltaikeinheit auf einer horizontal ausgerichteten Fläche mit einem Winkel zwischen 10° und 50°, vorteilhafterweise mit einem Winkel zwischen 20° und 40° zur Horizontalen ausgerichtet ist, wobei vorteilhafterweise die Tragkonstruktion eine Aufstellebene und eine Befestigungsebene definiert, welche einen Winkel zwischen 10° und 50°, vorteilhafterweise mit einem Winkel zwischen 20° und 40° einschließen, wobei weiterhin vorteilhafterweise der Abstellbereich und der Befestigungsbereich gemäß Anspruch 2 die Aufstellebene und die Befestigungsebene definieren.

4. Photovoltaikeinheit nach einem der vorangegangenen Ansprüche, wobei die Tragkonstruktion aus Rohren und/oder Profilen aufgebaut ist, insbesondere Metallrohren und/oder Metallprofilen, wobei vorteilhafterweise die Seitenteile gemäß Anspruch 2 aus einem gebogenen Rohr und/oder Profil und/oder mehreren miteinander verbundenen Rohren und/oder Profilen aufgebaut sind und/oder wobei der Abstellbereich und/oder der Befestigungsbereich und/oder der Sicherungsbereich durch mindestens einen Rohrabschnitt und/oder Profilabschnitt gebildet werden.

5. Photovoltaikeinheit nach einem der vorangegangenen Ansprüche, wobei die Tragkonstruktion Aussparungen aufweist, durch welche Erdnägel zur Befestigung der Tragkonstruktion am Erdboden hindurchgeführt werden können, wobei die Aussparungen vorteilhafterweise in dem Sicherungsbereich gemäß Anspruch 2 angeordnet sind und/oder wobei die die Aussparungen vorteilhafterweise durch die Rohre und/oder Profile gemäß Anspruch 4 hindurchgehen.

6. Photovoltaikeinheit nach einem der vorangegangenen Ansprüche, wobei das Photovoltaikmodul mit der Tragkonstruktion verklebt ist und/oder wobei Teile der Tragkonstruktion untereinander verklebt sind, wobei vorteilhafterweise die Seitenteile mit dem bzw. den Verbindungselementen gemäß Anspruch 2 verklebt sind, wobei weiterhin vorteilhafterweise die Seitenteile Aussparungen aufweisen, in welche die Verbindungselemente eingeschoben und dort mit den Seitenteilen verklebt werden können.

7. Photovoltaikeinheit nach einem der vorangegangenen Ansprüche, welche stapelbar ausgeführt ist, wobei vorteilhafterweise die Tragkonstruktion nach unten hin eine Öffnung definiert, mit welcher die Photovoltaikeinheit auf eine identische Photovoltaikeinheit aufgesetzt werden kann, wobei weiterhin vorteilhafterweise Kontaktelemente an der Tragkonstruktion ein Aufsetzten der Tragkonstruktionen der beiden Photovoltaikeinheiten aufeinander gewährleisten.

8. Photovoltaikanlage aus mehreren Photovoltaikeinheiten nach einem der vorangegangenen Ansprüche, wobei vorteilhafterweise zwischen den Photovoltaikeinheiten Reflektoren angeordnet sind, wobei die Reflektoren weiterhin vorteilhafterweise aus einem flexiblen Material bestehen und/oder an Verbindungselementen gemäß Anspruch 2 befestigt sind.

9. Verfahren zur Herstellung einer Photovoltaikanlage mit mindestens einer Photovoltaikeinheit nach einem der vorangegangenen Ansprüche, wobei die Photovoltaikeinheit auf einer Stellfläche abgestellt und durch Gewichte und/oder Erdnägel gesichert wird, wobei vorteilhafterweise die Tragkonstruktion und das Photovoltaikmodul separat angeliefert und vor Ort miteinander verklebt werden.

10. Verfahren zum Betrieb einer Photovoltaikanlage mit mindestens einer Photovoltaikeinheit nach einem der vorangegangenen Ansprüche, wobei die Photovoltaikeinheit nach der Aufnahme des Betriebs versetzt und/oder zeitweise eingelagert wird.
